# EUROPEAN PATENT SPECIFICATION

(11) **EP 1 416 477 B1**
(45) Date of publication and mention of the grant of the patent: **08.12.2010**
(21) Application number: 03256741.4
(22) Date of filing: 24.10.2003
(51) Int. Cl.: G11B 7/0045, G11B 7/006

(54) **Method of and apparatus for automatically optimising writing on optical recording medium**
Verfahren und Vorrichtung zur Automatischen Optimierung des Schreibens auf einem optischen Aufzeichnungsmedium
Procédé et appareil pour optimisation automatique d'écriture sur un support d'enregistrement optique

(30) Priority: 30.10.2002 KR 2002066574
(43) Date of publication of application: 06.05.2004
(73) Proprietor: SAMSUNG ELECTRONICS CO., LTD., Suwon-City, Kyungki-do (KR)
(72) Inventor: Hwang, Wook-yeon, Gyeonggi-do (KR); Ahn, Yong-jin, Seocho-gu Seoul (KR); Otsuka, Tatsuhiro, Paldal-gu Suwon-si Gyeonggi-do (KR); Park, In-sik, 2-dong Paldal-gu Suwon-si Gyeonggi-do (KR)
(74) Representative: Robinson, Ian Michael

(56) References cited:
- EP-A- 0 889 468
- EP-A- 1 197 967
- US-A1- 2001 006 500
- US-B1- 6 456 576
- PATENT ABSTRACTS OF JAPAN vol. 1996, no. 09, 30 September 1996 (1996-09-30) & JP 08 124165 A (RICOH CO LTD), 17 May 1996 (1996-05-17)

## Description

The present invention relates to the field of the writing optimization of an optical recording medium, and more particularly, to a method of automatically optimizing writing on an optical recording medium and an optical recording and/or reproducing apparatus for performing the method.

Conventional methods of optimizing writing on an optical recording medium applied to digital versatile disc-random access memories (DVD-RAMs) are known. However, these methods confine the structure of a disc to nucleation dominant technology. Writing optimization methods for rewritable discs such as rewritable compact discs (CD-RWs), DVD-RWs, and so forth, employing a fast growth method, or next generation high-density optical discs are not yet known.

As an example of the conventional writing optimization method, International Patent Publication No. WO 2001/11614, entitled "Trial Writing Method and Optical Disc Device Using the Same" assigned to Hitachi Co., discloses a method of optimizing writing by minimizing phase shift. In other words, when data is recorded with a varying write power in a predetermined pattern composed of a mark and a space and then reproduced, a phase difference between an edge of the write pattern and an edge of a phase lock loop (PLL) clock is extracted as an error pulse. A minimum condition (shift amount) is obtained from a table classifying and storing phase differences (error pulses) according to combinations of marks and spaces and a process of rewriting the write pattern on and reproducing the write pattern from a disc is repeated to determine an optimum write pulse width and power in which a phase difference is minimum. In this method, the write pattern is written on and reproduced from the disc while varying a power, a pulse width, and a position or varying a combination of the power, the pulse width, and the position to detect a write condition in which the number of error pulses of each component is minimum.

As another example of the conventional writing optimization method, Japanese Patent Publication No. 2000-251256, entitled "Recording Apparatus and Laser Power Setting Method," discloses a method of obtaining write and erase powers having an optimum asymmetry value. In this method, random data is written in a test write pattern and then reproduced while varying a laser power to obtain a ratio of a write power Pw to an erase power Pe (a ratio of Pw to Pe in optimum jitter and asymmetry is constant) in which jitter or an error rate is optimum and to reduce the time required for writing and reproducing data. Also, by using a single pattern, marks having a maximum length T (bit gap) are written in n tracks and marks having a minimum length T are written in and reproduced from n+2 tracks to obtain write and erase powers where an asymmetry value is optimum.

As still another example of the conventional writing optimization method, a document, entitled "New Method of Calibrating Adaptive Writing Pulses for DVD-RAM 4.7 GB Drive," JJAP Vol., 40(2001) 1694-1697, discloses a method of optimizing writing by minimizing jitter. In other words, after a write power is optimized according to an asymmetry calibrating method, edges of a mark, i.e., first and last pulses of write pulses, shift so as to minimize jitter. Also, this method can be applied to a predetermined write pattern composed of a mark and a space to classify, write, and reproduce the predetermined write pattern, calculate jitter of a radio frequency (RF) signal, and shift the write pulses so as to minimize jitter.

However, conventional writing optimization techniques are restricted to DVD-RAM type of media among rewritable media using a nucleation method producing a relatively low cross-erase rate. Also, conventionally, a method of determining a write power using only an asymmetry value is mainly presented. However, this method does not satisfy optimum writing conditions. The need for considering cross-erase caused during writing or cross-talk caused during reproduction, which may affect writing quality, is raised in high-density recording, which is a recent optical writing tendency.

EP-A-0 889 468 discloses a recording condition control method for an optical recording apparatus. By the method disclosed, the width of the record marks is optimally controlled, while cross-talk occurring between tracks upon signal reproduction and cross-erase upon signal recording are minimized.

According to the present invention there is provided an apparatus and method as set forth in the appended claims. Preferred features of the invention will be apparent from the dependent claims, and the description which follows.

The present invention provides a method of automatically optimizing writing on an optical recording medium using a fast growth method as well as a general nucleation method and an optical recording and/or reproducing apparatus for performing the method.

The present invention also provides a method of automatically optimizing writing conditions of an optical recording medium by considering cross-erase during writing and an optical recording and/or reproducing apparatus for performing the method.

The present invention also provides an automatic writing optimization method suitable for a CD, a DVD, and a next generation high-density disc and an optical recording and/or reproducing apparatus for performing the method.

The present invention also provides a method of using combinations of new write patterns for optimizing writing to simplify a circuit and reduce an operation time and an optical recording and/or reproducing apparatus for performing the method.

The present invention also provides a method of automatically detecting optimum writing conditions of powers and write patterns by calibrating asymmetry, jitter, and a magnitude of a RF signal and an optical recording and/or reproducing apparatus for performing the method.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
Figure 1 is a block diagram of an optical recording and/or reproducing apparatus according to an embodiment of the present invention;
Figures 2A through 2D are graphs for explaining a method of determining an erase power, in accordance with an embodiment of the present invention;
Figures 3A through 3C are graphs for explaining a method of determining a write power, in accordance with an embodiment of the present invention;
Figures 4A through 4C are graphs for explaining a method of determining a bias power, in accordance with an embodiment of the present invention;
Figure 5 is a graph illustrating jitter caused by cross-erase;
Figures 6A and 6B are views illustrating write condition elements, in accordance with an embodiment of the present invention;
Figures 7A through 7D are graphs for explaining illustrating a method of determining a write pattern based on a write pattern element dT2 indicating a period of time for which a cooling pulse lasts, according to an embodiment of the present invention;
Figures 8A through 8C are graphs for explaining a method of determining a write pattern based on a write pattern element dT1 indicating a shift amount of a starting edge of a first pulse according to an embodiment of the present invention;
Figure 9 is a flowchart of a method of automatically optimizing writing on an optical recording medium to determine powers, according to an embodiment of the present invention; and
Figure 10 is a flowchart of a method of automatically optimizing writing on an optical recording medium to determine a write pattern according to an embodiment of the present invention.

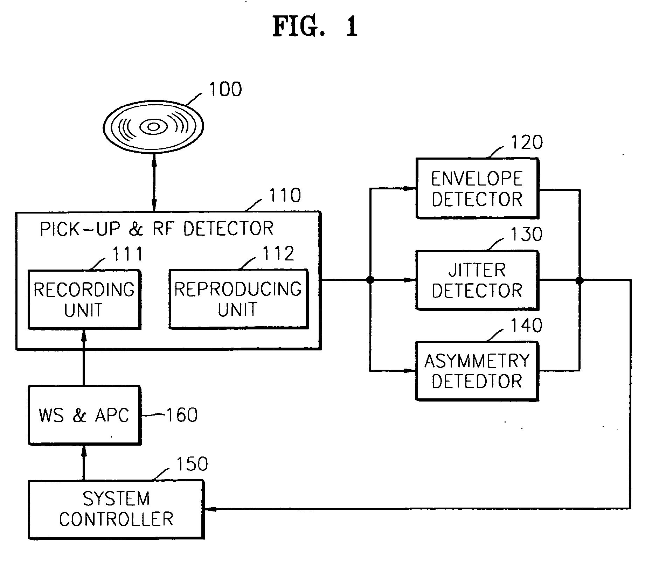

Figure 1 is a block diagram of an optical recording and/or reproducing apparatus according to an embodiment of the present invention. Referring to Figure 1, a pick-up & radio frequency (RF) detector 110 records data on and reproduces data from an optical recording medium, e.g., a disc 100. The pick-up and RF detector 110 includes a recording unit 111 and a reproducing unit 112. The recording unit 111 shapes a laser beam emitted from a laser diode (not shown) into write pulses on the disc 100 via an optical system (not shown). The reproducing unit 112 converts an optical signal reflected from the disc 100 into an electric signal via the optical system and detects an RF signal (called a reproduction signal) using the electric signal.

In performing an automatic writing optimization method according to an embodiment of the present invention, a system controller 150 performs writing to test characteristic powers. The system controller 150 sets a standard write power Pw, a standard erase power Pe, and a standard bias power Pbw. Thereafter, the system controller 150 gives a command to a write strategy (WS) & automatic power controller (APC) 160 to sequentially record a test write pattern (hereinafter referred to as a 2T + 5T pattern) having a combination of marks of lengths 2T and 5T (T is a bit gap) and a space in a plurality of tracks (here, three tracks) of a test zone of the disc 100 via the recording unit 111 in order to prevent cross-erase caused by a writing operation.

Here, the 2T + 5T pattern is used as the test write pattern in the automatic writing optimization method according to the present embodiment of the present invention because the mark of minimum length 2T is affected by a non-optimized power (in particular, a write power) and the mark of long length 5T in which the write power is saturated is hardly or scantly affected by the non-optimized power. In the present embodiment, the 2T + 5T pattern is used to employ asymmetry indicating a ratio of a short mark length T to a long mark length T.

The reproducing unit 112 reproduces a write pattern recorded in a middle track of the three tracks, which is affected during writing in tracks adjacent to the middle track. An envelope detector 120 detects an envelope of the RF signal reproduced by the reproducing unit 112 and outputs to the system controller 150 a maximum amplitude value, i.e., a peak-to-peak value 15pp of the RF signal for the mark of length 5T. The system controller 150 stores a maximum amplitude value 15pp detected from the standard writer power Pw, the standard erase power Pe, and the standard bias power Pbw output from the envelope detector 120, sequentially varies the standard writer power Pw, the standard erase power Pe, and the standard bias power Pbw, e.g., fixes the bias power Pbw to be 0.1mW and the write power to be 4.7mW and varies the erase power Pe within a range of 1.5mW - 2.5mW, and rewrites and/reproduces the test write pattern according to the above-described process. Here, a process of comparing the maximum amplitude value I5pp detected by the envelope detector 120 with the maximum amplitude value 15pp obtained from the standard writer power Pw, the standard erase power Pe, the standard bias power Pbw stored in the system controller 150 is repeated to determine an erase power Pe having the maximum amplitude value I5pp as an optimum erase power. Optimum write and bias powers for the standard write and bias powers Pw and Pbw are also determined according to the above-described process.

When the optimum powers Pw, Pe, and Pbw are determined, the system controller 150 records the test write pattern. First, after a standard write pattern is set, a write pattern element T1 indicating the width of a first pulse and a write pattern element T2 indicating the width of multi-pulses are fixed to predetermined values, and a write pattern element dT1 indicating the shift amount of a starting edge of the first pulse is set to a variable parameter. Thereafter, the 2T+5T pattern is recorded one time. The recorded 2T+5T pattern is reproduced to output an asymmetry value detected by an asymmetry detector 140 and a set value of the write pattern element dT1 at that time to the system controller 150. The system controller 150 records and/or reproduces the 2T+5T pattern while varying the write pattern element dT1 within a predetermined range. Thereafter, the system controller 150 compares the asymmetry value detected by the asymmetry detector 140 with a previously input asymmetry value and determines the write pattern element dT1 measured when the detected asymmetry value is minimum as an optimum write pattern element dT1. Using the above-described method, the system controller 150 also sets a write pattern element dT2 indicating a period of time for which a cooling pulse lasts to a variable parameter, records and/or reproduces the 2T+5T pattern, and determines the write pattern element dT2 measured when the peak-to-peak value 15pp detected by the envelope detector 120 is maximum as an optimum write pattern element dT2.

After fixing the determined optimum write pattern elements dT1 and dT2, the system controller 150 records and/or reproduces the 2T+5T pattern while varying each of the write pattern element dT1 indicating the width of the first pulse and the write pattern element dT2 indicating the width of the multi-pulses within a predetermined range. Next, the system controller 150 determines the write pattern elements T1 and T2 measured when jitter detected by a jitter detector 130 is minimum as optimum write pattern elements T1 and T2.

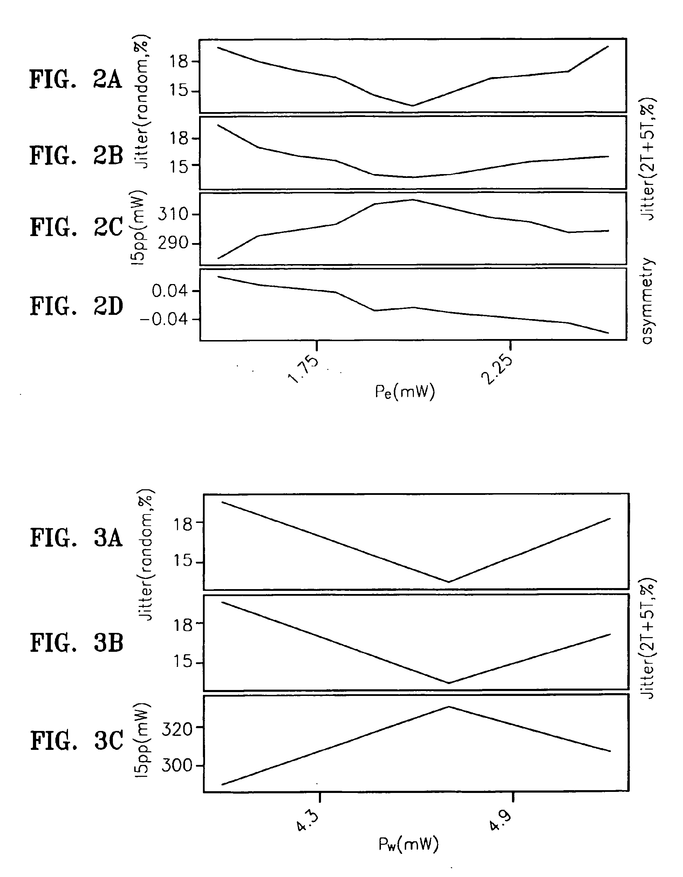

Figure 2A illustrates jitter in a random pattern due to the erase power Pe, Figure 2B illustrates jitter in the 2T+5T pattern due to the erase power Pe, Figure 2C illustrates the relationship between jitter and the maximum amplitude value I5pp of the RF signal for the mark of length 5T due to the erase power Pe, and Figure 2D illustrates the relationship between the erase power Pe and asymmetry.

As can be seen in Figures 2A and 2B, the random pattern and the 2T+5T pattern have the same recording and/or reproducing characteristic. As can be seen in Figure 2C, when jitter is minimized, the RF signal has the maximum amplitude value 15pp. Here, as can be seen in Figure 2D, an asymmetry value is within a predetermined range. Thus, in the present embodiment of the present invention, an erase power measured when the 2T+5T pattern is recorded and then the RF signal has the maximum amplitude value I5pp, is determined as an optimum erase power Pe.

Figure 3A illustrates jitter in the random pattern due to the write power Pw, Figure 3B illustrates jitter in the 2T+5T pattern due to the write power Pw, and Figure 3C illustrates the relationship between the write power Pw and the maximum amplitude value 15pp of the RF signal for the mark of length 5T.

As can be seen in Figures 3A and 3B, the random pattern has the same recording and/or reproducing characteristic as the 2T+5T pattern when the write power Pe is applied, as when the erase power Pe was applied. As can be seen in Figure 3C, the RF signal has the maximum value 15pp when jitter is minimized. Accordingly, in the present embodiment of the present invention, the write power Pw measured when the 2T+5T pattern is recorded and the RF signal has the maximum value 15pp, is determined as an optimum write power.

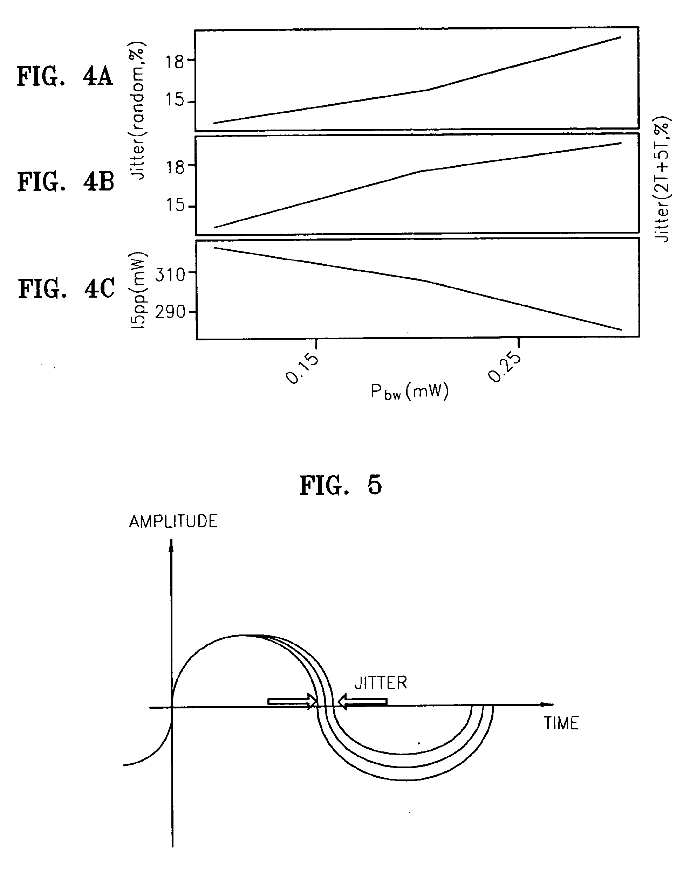

Figure 4A illustrates jitter in the random pattern due to the bias power Pbw, Figure 4B illustrates jitter in the 2T+5T pattern due to the bias power Pbw, and Figure 4C illustrates the relationship between the bias power Pbw and the maximum amplitude value I5pp of the RF signal for the mark of length 5T.

As can be seen in Figures 4A and 4B, the random pattern has the same recording and/or reproducing characteristic as the 2T+5T pattern even when the bias power Pbw is applied as when the erases power Pe and the write power Pw were applied. As can be seen in Figure 4C, the RF signal has the maximum amplitude value I5pp when jitter is minimized. Accordingly, in the present embodiment of the present invention, the bias power Pbw measured when the 2T+5T pattern is recorded and the RF signal has the maximum amplitude value 15pp, is determined as an optimum bias power.

In conclusion, the erase power Pe, the write power Pw, and the bias power Pbw used for recording have the same recording and/or reproducing characteristic according to jitter. Thus, a write pattern is recorded and reproduced while sequentially varying the erase power Pe, the write power Pw, and the bias power Pbw. Next, the erase power Pe, the write power Pw, and the bias power Pbw measured when the RF signal has the maximum amplitude value 15pp are determined as optimum erase, write, and bias powers. For example, after the bias power Pbw is fixed to 0.1mW, the write power to 4.7mW, and the erase power Pe is adjusted within a range of 1.5mW - 2.5mW, the erase power Pe measured when the RF signal has the maximum amplitude value 15pp is determined as an optimum erase power Pe. After the bias power Pbw and the determined optimum erase power Pe are fixed and the write power Pw is adjusted, the write power Pw measured when the RF signal the maximum value I5pp is determined as an optimum write power Pw. After the determined erase power Pe and write power Pw are fixed and the bias power Pbw is adjusted, the bias power Pbw measured when the RF signal has the maximum amplitude value I5PP is determined as an optimum bias power Pbw.

Figure 5 is a graph illustrating an effect of jitter occurring while the write pattern recorded in an adjacent track is erased with an increase in the write power Pw when the write pattern and the erase, write, and bias powers Pe, Pw, and Pbw are not optimized. In other words, a cross-erase phenomenon occurs when the write pattern is recorded in an adjacent track, which causes jitter.

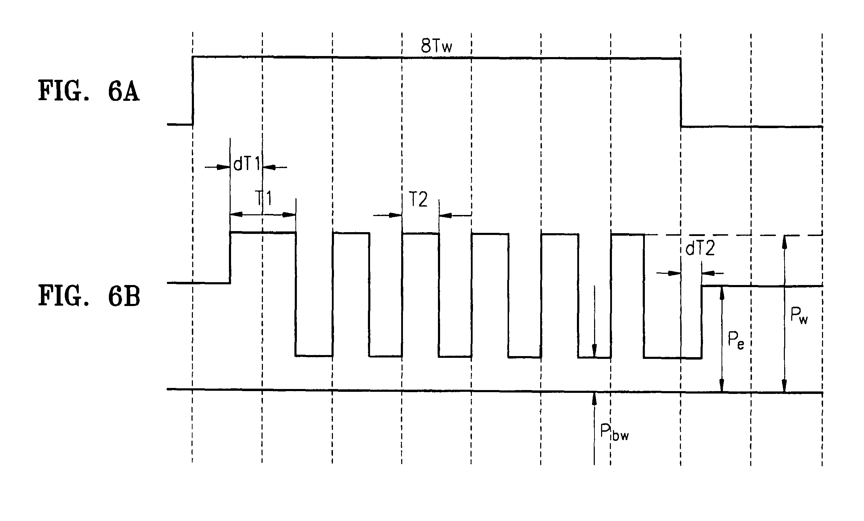

A mark having a predetermined length (8Tw in Figure 6A) may be recorded in a write pulse form on a disc as shown in Figure 6B. Figure 6B illustrates optical powers and write condition elements for write pattern, and the like. Write pulses include a first pulse having a write power Pw and a last pulse (called a cooling pulse) having a bias power Pbw. A train of multi-pulses, the number of which varies depending on a bit gap Tw, exists between the first pulse and the cooling pulse. Also, the erase power Pe is needed for a space period. T1 is a write pattern element indicating the width of the first pulse, dT1 is a shift amount of a starting edge of the first pulse, T2 is a write pattern element indicating the width of the multi-pulses, and dT2 is a write pattern element indicating a period of time for which the cooling pulse lasts.

A write pattern having a write pulse form as well as optical powers should be optimized in order to obtain stable writing quality during optical recording. The optimization of the write pattern depends on a recording and/or reproducing apparatus and the characteristics of a recording medium. Thus, the structure of the write pattern shown in Figure 6B and the optical powers necessary for recording have to be automatically determined. In particular, the cross-erase phenomenon caused by high-density recording has to be minimized. In order to achieve these objects, high-speed optimization should be attained with a simple circuit structure. Thus, a new test write pattern having the same recording and/or reproducing characteristic as an actual write pattern is required.

Accordingly, the present embodiment of the present invention uses a test write pattern having a minimum mark length T and a mark length T where a power is saturated due to the formation of marks. A modulation code, which is mainly used in a data storage system such as a magnetic recording system, an optical disc drive, or the like, is a run-length-limited (RLL) code which limits the minimum number of successive zeros between Is to "d" and the maximum number of the same to "k". When a RLL (1, 7) code is used, the test write pattern may be composed of] a combination of marks of two different lengths, i.e., a minimum length T (here, 2T) and a length T (here, 5T) in which a power is saturated due to the formation of marks, or a combination of marks of two or more different lengths. Optical recording media using the RLL (1, 7) code are high-density recording media such as HD-DVDs or HD-DVD Rewritables.

When a RLL (2, 10) code is used, the test write pattern may be a combination of marks of two different lengths, i.e., a minimum length T (here, 3T) and a length T (here, 6T) in which a power is saturated due to the formation of marks, or a combination of marks of two or more different lengths. Optical recording media using the RLL (2, 10) code are recording media such as CD- and DVD-family recording media.

In the disclosed embodiments of the present invention, a write pattern having a mark of minimum length 2T and a mark of length 5T is used for optimization.

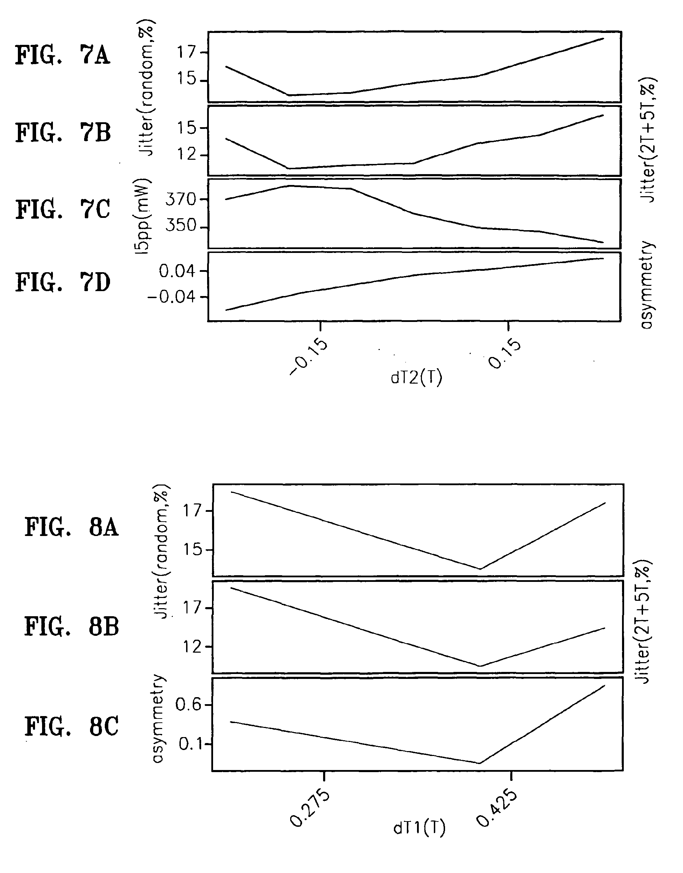

Figure 7A illustrates jitter in a random pattern according to variations in the write pattern element dT2 indicating of a period of time for which the cooling pulse lasts, Figure 7B illustrates jitter in the 2T+5T pattern according to variations in the write pattern element dT2, Figure 7C illustrates the relationship between the variations in the write pattern element dT2 and the maximum amplitude value 15pp of the RF signal for the mark of length 5T, and Figure 7D illustrates the relationship between the variation in the write pattern element dT2 and asymmetry.

As can be seen in Figures 7A and 7B, the random pattern and the 2T+5T pattern have the same recording and/or reproducing characteristic. As can be seen in Figure 7C, the RF signal has the maximum amplitude value 15pp when jitter is minimized. Here, an asymmetry value shown in Figure 7D is within a predetermined range. Accordingly, an optimum write pattern element dT2 can be determined when the RF signal has the maximum amplitude value 15pp.

Figure 8A illustrates jitter in the random pattern according to variations in the write pattern element dT1 indicating the shift amount of the starting edge of the first pulse, Figure 8B illustrates jitter in the 2T+5T pattern according to the variations in the write pattern element dT1, and Figure 8C illustrates the relationship between the variations in the write pattern element dT1 and asymmetry.

As shown in Figures 8A and 8B, the random pattern and the 2T+5T pattern have the same recording and/or reproducing characteristic. As can be seen in Figure 8C, when the write pattern element dT1 varies, the asymmetry is minimum at a point of time when jitter is minimized. Accordingly, an optimum write pattern element dT1 can be determined when the asymmetry is minimized.

An optimum write pattern element T1 indicating the width of the first pulse and an optimum write pattern element T2 indicating the width of the multi-pulses can be determined at a point of time when jitter in the 2T+5T pattern is minimized.

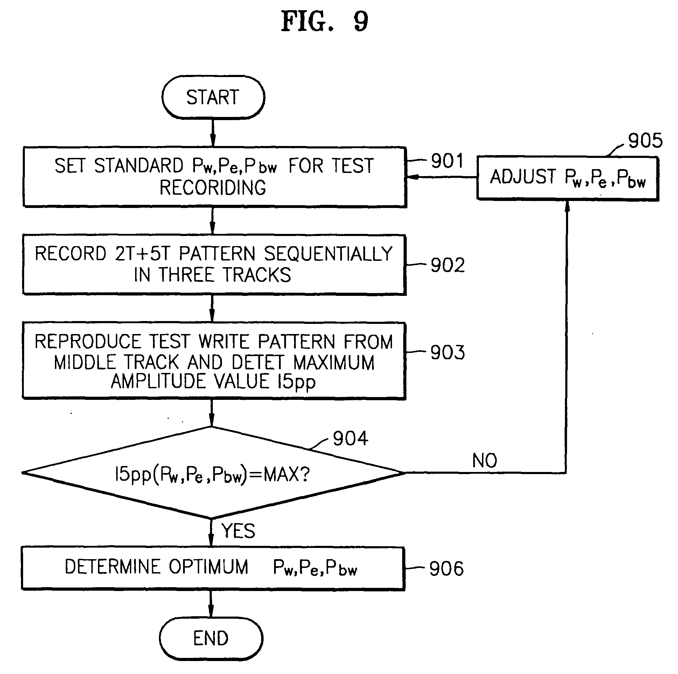

Figure 9 is a flowchart illustrating a method of automatically optimizing writing on an optical recording medium to determine powers according to an embodiment of the present invention. The method will be described with concurrent reference to Figure 1. Referring to Figure 9, in operation 901, a standard write power Pw, a standard erase power Pe, and a standard bias power Pbw for test writing are set. In operation 902, a test write pattern including a combination of a mark of length 2T and a mark of length 5T is recorded sequentially in a plurality of tracks (here, three tracks) of a test zone of the disc 100 in order to check an effect of cross-erase. In operation 903, the test write pattern is reproduced from the middle track of the three tracks and a maximum amplitude value I5pp of an RF signal for the mark of length 5T is detected by the envelope detector 120. In operation 904, whether the RF signal does not have the maximum amplitude value 15pp at the standard write power Pw, the standard erase power Pe, and the standard bias power Pbw is determined, and if the RF signal has the maximum amplitude value 15pp, in operation 905, the standard write power Pw, the standard erase power Pe, and the standard bias power Pbw are adjusted and operations 901-904 are repeated.

For example, by fixing the standard write power Pw and the bias power Pbw and adjusting the erase power Pe within a predetermined range, operations 902 through 905 are repeated until the RF signal has the maximum amplitude value 15pp detected by the envelope detector 120. In operation 906, the erase power Pe measured when the RF signal has the maximum amplitude value 15pp is determined to be an optimum erase power. Thereafter, after the determined erase power Pe and the standard bias power Pbw are fixed and the standard write power Pw is adjusted within a predetermined range, operations 902 through 905 are repeated until the RF signal has the maximum amplitude value I5pp detected by the envelope detector 120. In operation 905, the write power Pw measured when the RF signal has the maximum amplitude value 15pp is determined to be an optimum write power. Finally, after the determined write power Pw and the determined erase power Pe are fixed and the standard bias power Pbw is adjusted within a predetermined range, operations 902 through 905 are repeated until the RF signal has the maximum amplitude value 15pp detected by the envelope detector 120. In operation 906, the bias power Pbw measured when the RF signal has the maximum amplitude value 15pp is determined to be an optimum bias power. Although a specific order of adjusting the standard erase power Pe, the standard write power Pw, and the standard bias power Pbw has been explained, it is to be understood that the order may be altered according to myriad factors including for example, a manufacturer's design choice.

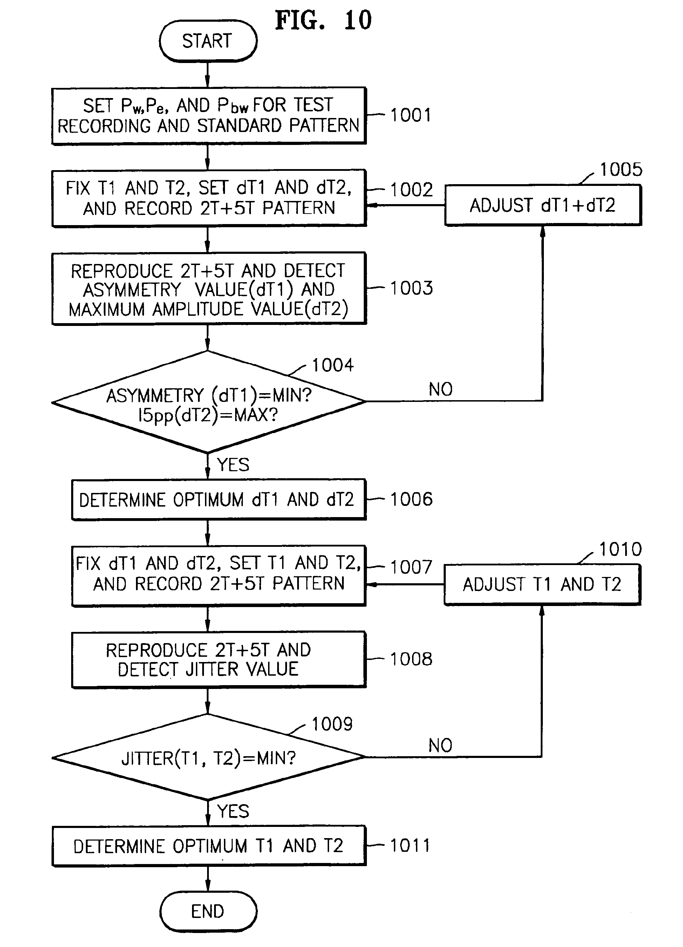

Figure 10 is a flowchart of a method of automatically optimizing writing on an optical recording medium to determine a write pattern. The method will be described with concurrent reference to Figure 1.

Referring to Figure 10, in operation 1001, write, erase, and bias powers Pw, Pe, and Pbw, respectively, for test recording are set and a standard pattern is set. Here, the write, erase, and bias powers Pw, Pe, and Pbw may be set to the optimum write, erase, and bias powers Pw, Pe, and Pbw determined according the method presented in Figure 9. However, the write, erase, and bias powers Pw, Pe, and Pbw may be set to standard write, erase, and bias powers Pw, Pe, and Pbw, respectively.

In operation 1002, the write pattern element T1 indicating the width of the first pulse and the write pattern element T2 indicating the width of multi-pulses are fixed, the write pattern element dT1 indicating the shift amount of the starting edge of the first pulse and the write pattern element dT2 indicating a period of time for which the cooling pulse lasts are set, and a write pattern of a mark of length 2T and a mark of length 5T. Here, the write pattern may be recorded in one track or sequentially in three tracks. Alternatively, in operation 1002, the write pattern elements T1, T2, dT1 may be fixed, the write pattern element dT2 may vary to determine an optimum write pattern element dT2, and the write pattern element dT1 may vary to determine an optimum write pattern element dT1. However, two or more write pattern elements may be simultaneously set to reduce the time required for the optimization.

In operation 1003, the reproducing unit 112 reproduces the 2T+5T pattern recorded in a track to output an RF signal, the asymmetry detector 140 detects an asymmetry value of the RF signal, and the envelope detector 120 detects a maximum amplitude value 15pp of the RF signal for the mark of length 5T. In operation 1004, an optimum write pattern element dT1 is determined when the asymmetry value determined by the asymmetry detector 140 is minimized, an optimum write pattern element dT2 is determined when the RF signal has the maximum amplitude value 15pp detected by the envelope detector 120, and whether the asymmetry value is minimized or the RF signal has the maximum amplitude value 15pp is determined. If the asymmetry value is not minimum or the RF signal does not have the maximum amplitude value 15pp, in operation 1005, the write pattern element dT1 or dT2 is adjusted. operations 102 through 105 are then repeated until the asymmetry value becomes minimum and the RF signal has the maximum amplitude value 15pp. In operation 1006, optimum write pattern elements dT1 and dT2 are determined when the RF signal has the maximum amplitude value 15pp.

In operation 1007, the determined optimum write pattern elements dT1 and dT2 are fixed, write pattern elements T1 and T2 are set, and the write pattern including the mark of length 2T and the mark of length 5T is recorded. Here, the write pattern may be recorded in one track or sequentially in a plurality of tracks. Alternatively, the write pattern elements dT1, dT2, and T1 may be fixed, the write pattern element T2 may vary to determine an optimum write pattern element dT2, and the write pattern element dT1 may vary to determine an optimum write pattern element dT1. However, two write pattern elements T1 and T2 are set to reduce the time required for the optimization.

In operation 1008, the reproducing unit 112 reproduces the 2T+5T recorded in a track to output an RF signal and the jitter detector 130 detects jitter in the RF signal. In operation 1009, whether jitter is minimized is determined. If jitter is not minimized, in operation 1010, the write pattern elements T1 and T2 are adjusted. Operations 1007 through 1010 are then repeated until jitter is minimized. In operation 1011, optimum write pattern elements T1 and T2 are determined when jitter detected by the jitter detector 130 is minimized.

As described above, the present invention can automatically optimize writing on an optical recording medium using a fast growth method as well as a nucleation dominant method. The embodiments of present invention can also automatically optimize recording conditions by considering cross-erase during optical recording, be suitable for recordable CDs, DVDs, and HD-DVDs, and in particular, can be applied to recording on HD-DVD-rewritable discs using a high-density recording method. Furthermore, the embodiments of present invention can simplify a circuit and reduce operation time using a test write pattern having the same recording and/or reproducing characteristic as an actual write pattern.

Although a few preferred embodiments have been shown and described, it will be appreciated by those skilled in the art that various changes and modifications might be made without departing from the scope of the invention, as defined in the appended claims.

## Claims

1. A method of optimizing recording conditions of an optical recording medium, **characterised by**:
recording sequentially a test write pattern comprising a combination of marks of two or more different lengths and a space in at least three adjacent tracks of the optical recording medium; and
checking a quality of a radio frequency signal reproduced from a middle track of the at least three sequentially recorded adjacent tracks in which the write pattern is recorded to determine the optimized recording conditions.

2. The method of claim 1, wherein the test write pattern comprises a first mark of length T, and a second mark of length NT which is longer than the first mark and in which power is saturated due to the formation of the marks, and a space, and wherein T is a cycle of a recording and/or reproducing clock and N is an integer.

3. The method of any preceding claim, wherein, when the optical recording medium uses a run-length-limited (RLL) (1, 7) code, the test write pattern comprises a combination of marks of two or more different lengths and a space.

4. The method of any preceding claim, wherein, when the optical recording medium uses an RLL (1, 7) code, the test write pattern comprises a mark of length 2T and a mark of length 5T, and a space.

5. The method of any preceding claim, wherein, when the optical recording medium uses a run-length-limited (RLL) (2, 10) code, the test write pattern comprises a mark of length 3T and a mark of length 6T, and a space.

6. The method of any preceding claim, wherein the checking further comprises optimizing power conditions for the test write pattern using a magnitude of the radio frequency signal.

7. The method of any preceding claim, wherein the checking further comprises optimizing a condition of the write pattern using the magnitude of the radio frequency signal.

8. The method of any preceding claim, wherein the checking further comprises optimizing a condition of the write pattern using an asymmetry value of the radio frequency signal.

9. The method of any preceding claim, wherein the checking further comprises optimizing a condition of the write pattern using a jitter value of the radio frequency signal.

10. The method of any preceding claim comprising determining the optimum powers using a magnitude of a radio frequency signal reproduced from one of the plurality of adjacent tracks in which the write pattern is recorded.

11. The method of claim 10, wherein the magnitude of the radio frequency signal is determined to be a peak-to-peak value of a radio frequency signal for a mark of length T of the test write pattern in which a power is saturated due to the formation of marks.

12. The method of claim 10 or 11, wherein the determining comprises:
reproducing the test write pattern recorded in a middle track of the plurality of tracks effected by writing on adjacent tracks to output a radio frequency signal; and
fixing two of write, bias, and erase powers (Pw,Pe,Pbw) and varying the other one of the write, bias, and erase powers within a range to determine optimum write, bias, and erase powers when the magnitude of the radio frequency signal is at a maximum.

13. The method of any of claims 10 to 12, wherein the recording comprises:
setting standard write, erase, and bias powers (Pw,Pe,Pbw) for recording the test write pattern; and
recording the test write pattern in the plurality of tracks.

14. The method of claim 13, wherein the determining comprises:
reproducing, by a radio frequency signal, the write pattern recorded in a middle track of the plurality of tracks effected by writing on adjacent tracks;
detecting an envelope of the radio frequency signal to detect a maximum amplitude of the radio frequency signal;
fixing the write and bias powers (Pw,Pbw) and varying the erase power (Pe) within a range to determine whether the magnitude of the radio frequency signal (I5pp) is the maximum amplitude value, wherein, when the magnitude of the radio frequency (I5pp) is not the maximum amplitude, repeating the reproducing, detecting, and fixing, and wherein, when the magnitude of the radio frequency (I5pp) is the maximum amplitude value, determining the erase power (Pe) is an optimum erase power.

15. The method of claim 14, wherein the determining further comprises fixing the bias power (Pbw) and the optimum erase power (Pe) and varying the write power (Pw) within a range to determine whether the magnitude of the radio frequency signal (I5pp) is the maximum amplitude value, wherein, when the magnitude of the radio frequency signal (I5pp) is not the maximum amplitude, repeating the reproducing, detecting, and fixing, and wherein, when the magnitude of the radio frequency signal (I5pp) is the maximum amplitude value, determining the write power (Pw) is an optimum write power.

16. The method of claim 15, wherein the determining further comprises fixing the optimum erase power (Pe) and the optimum write power (Pw) and varying the bias power (Pbw) within a range to determine whether the magnitude of the radio frequency signal (I5pp) is the maximum amplitude value, wherein, when the magnitude of the radio frequency signal (I5pp) is not the maximum amplitude, repeating the reproducing, detecting, and fixing, and wherein, when the magnitude of the radio frequency signal (I5pp) is the maximum amplitude value, determining the bias power (Pbw) is an optimum bias power.

17. The method of any of claims 10 to 16, further comprising:
setting the optimum powers determined in the determining and recording the test write pattern;
reproducing the test write pattern recorded on the optical recording medium to output the radio frequency signal; and
determining the test write pattern using the magnitude of the radio frequency signal.

18. The method of claim 17, wherein in the test write pattern determining, when the magnitude of the radio frequency signal is a maximum amplitude, a write pattern element indicating a period of time for which a cooling pulse (dT2) lasts is determined.

19. The method of claim 17 or 18, further comprising determining the test write pattern using an asymmetry value of the radio frequency signal.

20. The method of claim 19, wherein in the test write pattern determining, when the asymmetry value of the radio frequency signal is at a minimum, a write pattern element (dT1) indicating a shift amount of a starting edge of a first pulse is determined.

21. The method of any of claims 17 to 20, further comprising determining the write pattern using a jitter value of the radio frequency signal.

22. The method of claim 21, wherein in the determining the write pattern using a jitter value, when the jitter value of the radio frequency signal is a minimum, a write pattern element indicating a width (T1) of the first plus is determined.

23. The method of claim 21 or 22, wherein in the test write pattern determining, when the jitter value of the radio frequency signal is a minimum, a write pattern element indicating a width (T2) of multi-pluses is determined.

24. The method of any preceding claim wherein the quality of the radio frequency signal is a magnitude of the radio frequency signal (I5pp).

25. The method of any preceding claim comprising:
fixing a first write pattern element (T1) indicating a width of a first pulse and a second write pattern element (T2) indicating a width of multi-pulses, setting a third write pattern element (dT1) indicating a shift amount of a starting edge of the first pulse, and setting a fourth write pattern element (dT2) indicating a period of time for which a cooling pulse lasts to record a test write pattern;
detecting an asymmetry of the radio frequency signal;
detecting an envelope of the radio frequency signal; and
determining the third write pattern element (dT1) using the asymmetry of the radio frequency signal and determining the fourth write pattern element (dT2) using the envelope of the radio frequency signal.

26. The method of claim 25, further comprising:
detecting a jitter of the radio frequency signal;
fixing the third and fourth write pattern elements (dT1,dT2), re-setting the first and second write pattern elements (T1,T2), and recording the test write pattern; and
determining the first and second write pattern elements (T1,T2) using the jitter of the radio frequency signal.

## Patentansprüche

1. Verfahren zum Optimieren von Aufzeichnungsbedingungen eines optischen Aufzeichnungsmediums, **gekennzeichnet durch** die folgenden Schritte:
sequenzielles Aufzeichnen eines Testschreibmusters, das eine Kombination von Markierungen von zwei oder mehr verschiedenen Längen und einen Leerraum in mindestens drei angrenzenden Spuren des optischen Aufzeichnungsmediums umfasst; und
Prüfen einer Qualität eines aus einer mittleren Spur der mindestens drei sequenziell aufgezeichneten angrenzenden Spuren, in denen das Schreibmuster aufgezeichnet wird, wiedergegebenen Hochfrequenzsignals, um die optimierten Aufzeichnungsbedingungen zu bestimmen.

2. Verfahren nach Anspruch 1, wobei das Testschreibmuster Folgendes umfasst: eine erste Markierung der Länge T und eine zweite Markierung der Länge NT, die länger als die erste Markierung ist und in der Leistung aufgrund der Bildung der Markierungen gesättigt ist, und einen Leerraum, wobei T ein Zufluss eines Aufzeichnungs- und/oder Wiedergabetakts und N eine ganze Zahl ist.

3. Verfahren nach einem der vorhergehenden Ansprüche, wobei, wenn das optische Aufzeichnungsmedium einen lauflängenbegrenzten bzw. RLL-(1, 7)-Code verwendet, das Testschreibmuster eine Kombination von Markierungen zwei oder mehr verschiedener Längen und einen Leerraum umfasst.

4. Verfahren nach einem der vorhergehenden Ansprüche, wobei, wenn das optische Aufzeichnungsmedium einen RLL-(1, 7)-Code verwendet, das Testschreibmuster eine Markierung der Länge 2T und eine Markierung der Länge 5T und einen Leerraum umfasst.

5. Verfahren nach einem der vorhergehenden Ansprüche, wobei, wenn das optische Aufzeichnungsmedium einen lauflängenbegrenzten bzw. RLL-(2, 10)-Code verwendet, das Testschreibmuster eine Markierung der Länge 3T und eine Markierung der Länge 6T und einen Leerraum umfasst.

6. Verfahren nach einem der vorhergehenden Ansprüche, wobei das Prüfen ferner das Optimieren von Leistungsbedingungen für das Testschreibmuster unter Verwendung eines Betrags des Hochfrequenzsignals umfasst.

7. Verfahren nach einem der vorhergehenden Ansprüche, wobei das Prüfen das Optimieren eines Zustands des Schreibmusters unter Verwendung des Betrags des Hochfrequenzsignals umfasst.

8. Verfahren nach einem der vorhergehenden Ansprüche, wobei das Prüfen ferner das Optimieren eines Zustands des Schreibmusters unter Verwendung eines Asymmetriewerts des Hochfrequenzsignals umfasst.

9. Verfahren nach einem der vorhergehenden Ansprüche, wobei das Prüfen ferner das Optimieren eines Zustands des Schreibmusters unter Verwendung eines Jitterwerts des Hochfrequenzsignals umfasst.

10. Verfahren nach einem der vorhergehenden Ansprüche mit dem Schritt des Bestimmens der optimalen Leistungen unter Verwendung eines Betrags eines aus einer der mehreren angrenzenden Spuren, in denen das Schreibmuster aufgezeichnet wird, wiedergegebenen Hochfrequenzsignals umfasst.

11. Verfahren nach Anspruch 10, wobei der Betrag des Hochfrequenzsignals als ein Spitze-Spitze-Wert eines Hochfrequenzsignals für eine Markierung der Länge T des Testschreibmusters, worin eine Leistung aufgrund der Bildung von Markierungen gesättigt ist, bestimmt wird.

12. Verfahren nach Anspruch 10 oder 11, wobei das Bestimmen Folgendes umfasst:
Wiedergeben des in einer mittleren Spur der mehreren Spuren aufgezeichneten Testschreibmusters, das durch Schreiben auf angrenzenden Spuren bewirkt wird, um ein Hochfrequenzsignal auszugeben; und
Fixieren von zwei von Schreib-, Bias- und Löschleistung (Pw, Pe, Pbw) und Variieren der anderen der Schreib-, Bias- und Löschleistung in einem Bereich, um optimale Schreib-, Bias- und Löschleistung zu bestimmen, wenn der Betrag des Hochfrequenzsignals auf einem Maximum ist.

13. Verfahren nach einem der Ansprüche 10 bis 12, wobei das Aufzeichnen Folgendes umfasst:
Einstellen von standardmäßiger Schreib-, Lösch- und Bias-Leistung (Pw, Pe, Pbw) zum Aufzeichnen des Testsschreibmusters; und
Aufzeichneen des Testschreibmusters in den mehreren Spuren.

14. Verfahren nach Anspruch 13, wobei das Bestimmen Folgendes umfasst:
Wiedergeben des in der mittleren Spur der mehreren Spuren aufgezeichneten Schreibmusters, das durch Schreiben auf angrenzende Spuren bewirkt wird, durch ein Hochfrequenzsignal;
Detektieren einer Hüllkurve des Hochfrequenzsignals, um eine maximale Amplitude des Hochfrequenzsignals zu detektieren;
Fixieren der Schreib- und Bias-Leistung (Pw, Pbw) und Variieren der Löschleistung (Pe) in einem Bereich, um zu bestimmen, ob der Betrag des Hochfrequenzsignals (I5pp) der Maximalamplitudenwert ist, wobei, wenn der Betrag der Hochfrequenz (I5pp) nicht die Maximalamplitude ist, das Wiedergeben, Detektieren und Fixieren wiederholt werden und wobei, wenn der Betrag der Hochfrequenz (I5pp) der Maximalamplitudenwert ist, bestimmt wird, dass die Löschleistung (Pe) eine optimale Löschleistung ist.

15. Verfahren nach Anspruch 14, wobei das Bestimmen ferner Folgendes umfasst: Fixieren der Bias-Leistung (Pbw) und der optimalen Löschleistung (Pe) und Variieren der Schreibleistung (Pw) in einem Bereich, um zu bestimmen, ob der Betrag des Hochfrequenzsignals (I5pp) der Maximalamplitudenwert ist, wobei, wenn der Betrag des Hochfrequenzsignals (I5pp) nicht die Maximalamplitude ist, das Wiedergeben, Detektieren und Fixieren wiederholt werden und wobei, wenn der Betrag des Hochfrequenzsignals (I5pp) der Maximalamplitudenwert ist, bestimmt wird, dass die Schreibleistung (Pw) eine optimale Schreibleistung ist.

16. Verfahren nach Anspruch 15, wobei das Bestimmen ferner Folgendes umfasst: Fixieren der optimalen Löschleistung (Pe) und der optimalen Schreibleistung (Pw) und Variieren der Bias-Leistung (Pbw) in einem Bereich, um zu bestimmen, ob der Betrag des Hochfrequenzsignals (I5pp) der Maximalamplitudenwert ist, wobei, wenn der Betrag des Hochfrequenzsignals (I5pp) nicht die Maximalamplitude ist, das Wiedergeben, Detektieren und Fixieren wiederholt werden und wobei, wenn der Betrag des Hochfrequenzsignals (I5pp) der Maximalamplitudenwert ist, bestimmt wird, dass die Bias-Leistung (Pbw) eine optimale Bias-Leistung ist.

17. Verfahren nach einem der Ansprüche 10 bis 16, ferner mit den folgenden Schritten:
Einstellen der beim Bestimmen und Aufzeichnen des Testschreibmusters bestimmten optimalen Leistungen;
Wiedergeben des auf dem optischen Aufzeichnungsmedium aufgezeichneten Testschreibmusters, um das Hochfrequenzsignal auszugeben; und
Bestimmen des Testschreibmusters unter Verwendung des Betrags des Hochfrequenzsignals.

18. Verfahren nach Anspruch 17, wobei beim Bestimmen des Testschreibmusters, wenn der Betrag des Hochfrequenzsignals eine Maximalamplitude ist, ein Schreibmusterelement bestimmt wird, das den Zeitraum angibt, für den ein Kühlimpuls (dT2) andauert.

19. Verfahren nach Anspruch 17 oder 18, ferner mit dem Schritt des Bestimmens des Testschreibmusters unter Verwendung eines Asymmetriewerts des Hochfrequenzsignals.

20. Verfahren nach Anspruch 19, wobei beim Bestimmen des Testschreibmusters, wenn der Asymmetriewert des Hochfrequenzsignals auf einem Minimum ist, ein Schreibmusterelement (dT1) bestimmt wird, das einen Verschiebungsbetrag einer Startflanke eines ersten Impulses angibt.

21. Verfahren nach einem der Ansprüche 17 bis 20, ferner mit dem Schritt des Bestimmens des Schreibmusters unter Verwendung eines Jitterwerts des Hochfrequenzsignals.

22. Verfahren nach Anspruch 21, wobei beim Bestimmen des Schreibmusters unter Verwendung eines Jitterwerts, wenn der Jitterwert des Hochfrequenzsignals ein Minimum ist, ein Schreibmusterelement bestimmt wird, das eine Breite (T1) des ersten Pulses angibt.

23. Verfahren nach Anspruch 21 oder 22, wobei beim Bestimmen des Testschreibmusters, wenn der Jitterwert des Hochfrequenzsignals ein Minimum ist, ein Schreibmusterelement bestimmt wird, das eine Breite (T2) von Mehrfachimpulsen angibt.

24. Verfahren nach einem der vorherigen Ansprüche, wobei die Qualität des Hochfrequenzsignals ein Betrag des Hochfrequenzsignals (I5pp) ist.

25. Verfahren nach einem der vorhergehenden Ansprüche, mit den folgenden Schritten:
Fixieren eines ersten Schreibmusterelements (T1), das eine Breite eines ersten Impulses angibt, und eines zweiten Schreibmusterelements (T2), das eine Breite von Mehrfachimpulsen angibt, Einstellen eines dritten Schreibmusterelements (dT1), das einen Verschiebungsbetrag einer Startflanke des ersten Impulses angibt, und Einstellen eines vierten Schreibmusterelements (dT2), das einen Zeitraum angibt, für den ein Kühlimpuls andauert, um ein Testschreibmuster aufzuzeichnen;
Detektieren einer Asymmetrie des Hochfrequenzsignals;
Detektieren einer Hüllkurve des Hochfrequenzsignals; und
Bestimmen des dritten Schreibmusterelements (dT1) unter Verwendung der Asymmetrie des Hochfrequenzsignals und Bestimmen des vierten Schreibmusterelements (dT2) unter Verwendung der Hüllkurve des Hochfrequenzsignals.

26. Verfahren nach Anspruch 25, ferner mit den folgenden Schritten:
Detektieren eines Jitter des Hochfrequenzsignals;
Fixieren des dritten und vierten Schreibmusterelements (dT1, dT2), Neueinstellen des ersten und zweiten Schreibmusterelements (T1, T2) und Aufzeichnen des Testschreibmusters; und
Bestimmen des ersten und zweiten Schreibmusterelements (T1, T2) unter Verwendung des Jitter des Hochfrequenzsignals.

## Revendications

1. Procédé d'optimisation des conditions d'enregistrement d'un support d'enregistrement optique, **caractérisé par** :
l'enregistrement séquentiel d'un motif d'écriture de test comprenant une combinaison de marques de deux longueurs différentes ou plus et d'un espace dans au moins trois pistes adjacentes du support d'enregistrement optique ; et
la vérification d'une qualité d'un signal radiofréquence reproduit à partir d'une piste du milieu parmi les au moins trois pistes adjacentes enregistrées séquentiellement et dans laquelle le motif d'écriture est enregistré afin de déterminer les conditions d'enregistrement optimisées.

2. Procédé selon la revendication 1, dans lequel le motif d'écriture de test comprend une première marque de longueur T et une seconde marque de longueur NT qui est plus longue que la première marque et dans laquelle la puissance est saturée du fait de la formation des marques, et un espace, et dans lequel T est un cycle d'une horloge d'enregistrement et/ou de reproduction et N est un entier.

3. Procédé selon l'une quelconque des revendications précédentes, dans lequel, lorsque le support d'enregistrement optique utilise un code à longueur de marque limitée (RLL) (1, 7), le motif d'écriture de test comprend une combinaison de marques de deux longueurs différentes ou plus et d'un espace.

4. Procédé selon l'une quelconque des revendications précédentes, dans lequel, lorsque le support d'enregistrement optique utilise un code RLL (1, 7), le motif d'écriture de test comprend une marque de longueur 2T et une marque de longueur 5T, et un espace.

5. Procédé selon l'une quelconque des revendications précédentes, dans lequel, lorsque le support d'enregistrement optique utilise un code à longueur de marque limitée (RLL) (2, 10), le motif d'écriture de test comprend une marque de longueur 3T et une marque de longueur 6T, et un espace.

6. Procédé selon l'une quelconque des revendications précédentes, dans lequel la vérification consiste en outre à optimiser des conditions de puissance pour le motif d'écriture de test en utilisant un niveau du signal radiofréquence.

7. Procédé selon l'une quelconque des revendications précédentes, dans lequel la vérification consiste en outre à optimiser une condition du motif d'écriture en utilisant le niveau du signal radiofréquence.

8. Procédé selon l'une quelconque des revendications précédentes, dans lequel la vérification consiste en outre à optimiser une condition du motif d'écriture en utilisant une valeur d'asymétrie du signal radiofréquence.

9. Procédé selon l'une quelconque des revendications précédentes, dans lequel la vérification consiste en outre à optimiser une condition du motif d'écriture en utilisant une valeur de gigue du signal radiofréquence.

10. Procédé selon l'une quelconque des revendications précédentes, consistant à déterminer les puissances optimales en utilisant un niveau d'un signal radiofréquence reproduit à partir de l'une de la pluralité de pistes adjacentes dans lesquelles le motif d'écriture est enregistré.

11. Procédé selon la revendication 10, dans lequel le niveau du signal radiofréquence est déterminé comme étant une valeur crête-crête d'un signal radiofréquence pour une marque de longueur T du motif d'écriture de test dans lequel une puissance est saturée du fait de la formation de marques.

12. Procédé selon la revendication 10 ou 11, dans lequel la détermination consiste à :
reproduire le motif d'écriture de test enregistré dans une piste du milieu de la pluralité de pistes, cela étant effectué par écriture sur des pistes adjacentes pour fournir en sortie un signal radiofréquence ; et
fixer deux puissances parmi des puissances d'écriture, de polarisation et d'effacement (Pw, Pe, Pbw) et faire varier l'autre des puissances d'écriture, de polarisation et d'effacement à l'intérieur d'une gamme pour déterminer des puissances d'écriture, de polarisation et d'effacement optimales lorsque le niveau du signal radiofréquence atteint un maximum.

13. Procédé selon l'une quelconque des revendications 10 à 12, dans lequel l'enregistrement consiste à :
régler des puissances nominales d'écriture, d'effacement et de polarisation (Pw, Pe, Pbw) pour enregistrer le motif d'écriture de test ; et
enregistrer le motif d'écriture de test dans la pluralité de pistes.

14. Procédé selon la revendication 13, dans lequel la détermination consiste à :
reproduire, au moyen d'un signal radiofréquence, le motif d'écriture enregistré dans une piste du milieu de la pluralité de pistes, cela étant effectué par écriture sur des pistes adjacentes ;
détecter une enveloppe du signal radiofréquence afin de détecter une amplitude maximale du signal radiofréquence ;
fixer les puissances d'écriture et de polarisation (Pw, Pbw) et faire varier la puissance d'effacement (Pe) à l'intérieur d'une gamme pour déterminer si le niveau du signal radiofréquence (I5pp) est la valeur d'amplitude maximale, et lorsque le niveau du signal radiofréquence (I5pp) n'est pas l'amplitude maximale, répéter la reproduction, la détection et la fixation, et lorsque le niveau du signal radiofréquence (I5pp) est la valeur d'amplitude maximale, déterminer que la puissance d'effacement (Pe) est une puissance d'effacement optimale.

15. Procédé selon la revendication 14, dans lequel la détermination consiste en outre à fixer la puissance de polarisation (Pbw) et la puissance d'effacement optimale (Pe) et à faire varier la puissance d'écriture (Pw) à l'intérieur d'une gamme pour déterminer si le niveau du signal radiofréquence (I5pp) est la valeur d'amplitude maximale, et lorsque le niveau du signal radiofréquence (I5pp) n'est pas l'amplitude maximale, répéter la reproduction, la détection et la fixation, et lorsque le niveau du signal radiofréquence (I5pp) est la valeur d'amplitude maximale, déterminer que la puissance d'écriture (Pw) est une puissance d'écriture optimale.

16. Procédé selon la revendication 15, dans lequel la détermination consiste en outre à fixer la puissance d'effacement optimale (Pe) et la puissance d'écriture optimale (Pw) et à faire varier la puissance de polarisation (Pbw) à l'intérieur d'une gamme pour déterminer si le niveau du signal radiofréquence (I5pp) est la valeur d'amplitude maximale et, lorsque le niveau du signal radiofréquence (I5pp) n'est pas l'amplitude maximale, répéter la reproduction, la détection et la fixation, et lorsque le niveau du signal radiofréquence (I5pp) est la valeur d'amplitude maximale, déterminer que la puissance de polarisation (Pbw) est une puissance de polarisation optimale.

17. Procédé selon l'une quelconque des revendications 10 à 16, consistant en outre à :
régler les puissances optimales déterminées lors de la détermination et de l'enregistrement du motif d'écriture de test ;
reproduire le motif d'écriture de test enregistré sur le support d'enregistrement optique pour fournir en sortie le signal radiofréquence ; et
déterminer le motif d'écriture de test en utilisant le niveau du signal radiofréquence.

18. Procédé selon la revendication 17, dans lequel, lors de la détermination du motif d'écriture de test, lorsque le niveau du signal radiofréquence est une amplitude maximale, un élément de motif d'écriture indiquant une durée d'une impulsion de refroidissement (dT2) est déterminé.

19. Procédé selon la revendication 17 ou 18, consistant en outre à déterminer le motif d'écriture de test en utilisant une valeur d'asymétrie du signal radiofréquence.

20. Procédé selon la revendication 19, dans lequel, lors de la détermination du motif d'écriture de test, lorsque la valeur d'asymétrie du signal radiofréquence atteint un minimum, un élément de motif d'écriture (dT1) indiquant un degré de décalage d'un front avant d'une première impulsion est déterminé.

21. Procédé selon l'une quelconque des revendications 17 à 20, consistant en outre à déterminer le motif d'écriture en utilisant une valeur de gigue du signal radiofréquence.

22. Procédé selon la revendication 21, dans lequel, lors de la détermination du motif d'écriture en utilisant une valeur de gigue, lorsque la valeur de gigue du signal radiofréquence atteint un minimum, un élément de motif d'écriture indiquant une largeur (T1) de la première impulsion est déterminé.

23. Procédé selon la revendication 21 ou 22, dans lequel, lors de la détermination du motif d'écriture de test, lorsque la valeur de gigue du signal radiofréquence atteint un minimum, un élément de motif d'écriture indiquant une largeur (T2) d'impulsions multiples est déterminé.

24. Procédé selon l'une quelconque des revendications précédentes, dans lequel la qualité du signal radiofréquence est un niveau du signal radiofréquence (I5pp).

25. Procédé selon l'une quelconque des revendications précédentes, consistant à :
fixer un premier élément de motif d'écriture (T1) indiquant une largeur d'une première impulsion et un second élément de motif d'écriture (T2) indiquant une largeur d'impulsions multiples, régler un troisième élément de motif d'écriture (dT1) indiquant un degré de décalage d'un front avant de la première impulsion, et
régler un quatrième élément de motif d'écriture (dT2) indiquant une durée d'une impulsion de refroidissement pour enregistrer un motif d'écriture de test ;
détecter une asymétrie du signal radiofréquence ;
détecter une enveloppe du signal radiofréquence ; et
déterminer le troisième élément de motif d'écriture (dT1) en utilisant l'asymétrie du signal radiofréquence et déterminer le quatrième élément de motif d'écriture (dT2) en utilisant l'enveloppe du signal radiofréquence.

26. Procédé selon la revendication 25, consistant en outre à :
détecter une gigue du signal radiofréquence ;
fixer les troisième et quatrième éléments de motif d'écriture (dT1, dT2), réinitialiser les premier et second éléments de motif d'écriture (T1, T2), et enregistrer le motif d'écriture de test ; et
déterminer les premier et second éléments de motif d'écriture (T1, T2) en utilisant la gigue du signal radiofréquence.
